# EUROPEAN PATENT APPLICATION

(11) **EP 1 746 314 A2**
(43) Date of publication of application: **24.01.2007**
(21) Application number: 06015178.4
(22) Date of filing: 20.07.2006
(51) Int. Cl.: F16J 15/02

(54) **Seal structure and process for producing same**

(30) Priority: 21.07.2005 JP 2005210897
(71) Applicant: NICHIAS CORPORATION, Tokyo 105-8555 (JP)
(72) Inventor: Murakami, Atsushi, Hamamatsu-shi Shizuoka 431-2103 (JP)
(74) Representative: Grünecker, Kinkeldey, Stockmair & Schwanhäusser Anwaltssozietät

(57) **Abstract**

The present invention provides a seal structure including: (a) an elastically deformable substrate; and (b) a thermoplastic substance bonded to the elastically deformable substrate, the elastically deformable substrate (a) having a first shape upon the seal structure being in a temperature less than the softening temperature of the thermoplastic substance, and the elastically deformable substrate (a) having a second shape upon the seal structure being in a temperature not less than the softening temperature of the thermoplastic substance, a soundproofing cover for automobile engines including the seal structure, and a process for producing the seal structure.

## Description

### FIELD OF THE INVENTION

The present invention relates to a seal structure which is deformed by heat to seal a gap and a process for producing the same.

### BACKGROUND OF THE INVENTION

For the purpose of fluid-sealing, soundproofing, and heat insulation of joints in buildings, industrial equipments, and automobiles, various foam materials such as urethane forms and liquid curable seal materials such as silicone sealants have been widely used. For exhibiting sufficient performance of fluid-sealing, soundproofing, and heat insulation, it is necessary to fill gaps of the joints in the structures.

A seal material formed of a conventional foam material is mounted on a required part with compressing the seal material and gaps of the joints are filled through restoration of the thickness by elastic force of the material itself. However, since the conventional foam material instantaneously restores when pressure is released, the foam material or an assembly article using the foam material should be mounted on a site where fluid-sealing, soundproofing, and heat insulation is required, with maintaining a state which resists restoration force of the foam material in the compressed state, so that workability at mounting is very poor.

A seal material comprising a solid rubber, which is a solid matter, is also employed. The seal material comprising a solid rubber is excellent in sealing ability for a fluid it self since the fluid is difficult to penetrate into the material as compared with the foam material and also the material is excellent in heat insulation and soundproofing since heat and sound wave is hardly intermitted via the fluid. However, a high stress is required for deforming the material by compression and hence workability at mounting is more problematic than the case of the foam material.

When the seal material is thinned, the workability at mounting is improved but performance of fluid-sealing, soundproofing, and heat insulation becomes insufficient since a gap is generated. By reducing the restoration force in a compressed state using a soft foam material, the workability can be improved to some extent but is not yet sufficient. Moreover, a foam material having a.low restoration force is poor in fluid-sealing performance and thus is not preferred.

As mentioned above, performance of fluid-sealing, soundproofing, and heat insulation conflicts with mounting ability, and a seal material satisfying respective properties is required.

Based on such a background, a heat-sensitive expandable material is also used, wherein a rubber composition capable of foaming by heat is placed on a site to be sealed and a gap is closed by foaming upon heating of the part to be sealed. For example, there is known a thermally expandable material wherein a core material composed of a thermoplastic resin is combined with an external material composed of a crosslinked polymer (see, Reference 1). However, in the thermally expandable material, when it is expanded in the thickness direction, there is a risk that length in the planer direction reduces to generate a gap in the planer direction and thus sealing ability is deteriorated. Moreover, there are also known thermally expandable tubes composed of a mixed product of a thermoplastic resin and a crosslinked rubber (see, References 2 and 3). However, there is a problem that these thermally expandable tubes also generate a gap in the planer direction with reducing length in the planer direction when they are expanded in the thickness direction.

There are also known as heat-sensitive expandable materials a urethane shape-memory polymer foam (see, Reference 4) and shape-memory vulcenized rubber molded articles wherein a resin such as a polyolefin is blended into a rubber (see, References 5, 6, 7, 8, and 9). Moreover, polynorbornene and a styrene-butadiene copolymer are also known to be shape-memory polymers and a thermally expandable material which expands into a sponge upon heating to increase its thickness can be obtained by producing a sponge using one of the raw material polymers, compressing it, and fixing the shape in the compressed state. Additionally, there is also known a shape-memory foam wherein a resin is blended into a rubber (see, Reference 10). However, since these heat-sensitive expandable materials are insufficient in performance of maintaining the compressed state, it is difficult to store them in the compressed state for a long period of time and further, a heat-sensitive expanding property of rapid expansion at a specific temperature is insufficient.

In addition, there are known heat-sensitive expandable materials obtained by combining a foam material with a thermosetting resins or the like as a fixing agent (see, References 11, 12, 13, and 14). However, since these heat-sensitive expandable materials have insufficient performance as fixing agents and hence compressed shapes cannot be maintained over a long period of time, there is a risk that they are expanded during storage. Moreover, a heat-sensitive expandable material obtained by combining a foam of a high-melting-point resin with a low-melting-point thermoplastic resin (see, Reference 15) is also known. However, since the foam material in the heat-sensitive expandable material is composed of a thermoplastic resin, elastic restoration force may decrease due to creep when a long period of time has passed in a compressed state and hence the material may not expand even when heated after a long-term storage in some cases. Furthermore, a heat-sensitive expandable material obtained by combining a urethane foam with a thermoplastic resin and asphalt (see, Reference 16) is also known, but since the heat-sensitive expandable material is compressed at normal temperature and the compressed shape is maintained only by the viscosity of asphalt, the material cannot maintain its compressed shape over a long period of time and hence there is a risk of expansion during storage. Moreover, since the raw material of the foam material is not a crosslinked rubber but a urethane foam, there is a possibility that the heat-sensitive expandable material may not expand even upon heating due to permanent set of the urethane foam when the material have been maintained in a compressed state for a long period of time.

Besides, a heat-sensitive expandable material obtained by impregnating a foam material with a thermoplastic substance is proposed (see, Reference 17). However, as a result of additional tests, in some cases, it was found that the material could not maintain a compressed shape over a long period of time or did not expand in some cases when it was stored in a compressed state for a long period of time at 50°C that was a supposed temperature of inside of a storehouse in summer season. Furthermore, although an improved foam material (see, Reference 18), unlike the seal material composed of a solid rubber is also proposed, a fluid is inherently apt to permeate the inside of the material, and thus sealing performance, soundproofing performance and heat-insulating performance thereof are not always sufficient.
[Reference 1] JP-A-56-163181
[Reference 2] JP-A-52-146482
[Reference 3] JP-A-53-78282
[Reference 4] JP-B-7-39506
[Reference 5] JP-A-9-309986
[Reference 6] JP-A-2000-191847
[Reference 7] JP-A-2000-217191
[Reference 8] JP-A-2001-40144
[Reference 9] JP-A-2002-12707
[Reference 10] JP-A-2000-1558
[Reference 11] JP-A-60-171142
[Reference 12] JP-B-63-32611
[Reference 13] JP-B-5-63291
[Reference 14] JP-A-8-174588
[Reference 15] JP-A-8-34871
[Reference 16] JP-B-5-64092
[Reference 17] JP-A-2002-69228
[Reference 18] JP-A-2004-276377

### SUMMARY OF THE INVENTION

The invention is conducted in consideration of the above circumstances and it is an object thereof to provide a seal structure which is excellent in each performance of fluid-sealing, soundproofing, and heat insulation and also excellent in mounting workability to each site to be treated, and is obtained at a low cost without requiring particular materials and facilities at it production. Furthermore, another object of the invention is to provide a bond material excellent in sealing performance using the above seal structure and a soundproofing cover for automobile engines excellent in soundproofing performance.

As a result of extensive studies in order to solve the above problems, the present inventors have found that, when a structure obtained by bonding an elastically deformable substrate (a) to a thermoplastic substance (b) is deformed by compression and/or bending upon heating, and cooled with the deformed state, the deformed state is maintained over a long period of time even at a relatively high temperature and the substrate (a) is elastically restored into a nearly original shape upon heating. Also, they have found that excellent performance of each of fluid-sealing, soundproofing, and heat insulation is attained and also mounting operation on a site to be treated can be easily performed by using such a seal structure at the site to be treated. Moreover, they have found at the same time that such a seal structure may be used as a soundproofing cover for automobile engines excellent in mounting ability and soundproofing performance. The invention is based on these findings.

The present inventors have made eager investigation to examine the problem. As a result, it has been found that the foregoing objects can be achieved by the following seal structures, soundproofing covers for automobiles and process for producing the seal structures. With this finding, the present invention is accomplished. The present invention is mainly directed to the following items:
1. A seal structure comprising: (a) an elastically deformable substrate; and (b) a thermoplastic substance bonded to the elastically deformable substrate, the elastically deformable substrate (a) having a first shape upon the seal structure being in a temperature less than the softening temperature of the thermoplastic substance, and the elastically deformable substrate (a) having a second shape upon the seal structure being in a temperature not less than the softening temperature of the thermoplastic substance.
2. The seal structure according to item 1, wherein the elastically deformable substrate (a) comprises one of a crosslinked rubber and a thermoplastic elastomer.
3. The seal structure according to item 1, wherein the elastically deformable substrate (a) comprises EPDM.
4. The seal structure according to item 1, wherein the thermoplastic substance (b) comprises a thermoplastic resin.
5. The seal structure according to item 1, wherein the softening temperature of the thermoplastic substance (b) is from 30 to 200°C.
6. The seal structure according to item 1, wherein the thermoplastic substance (b) comprises an ethylene copolymer.
7. The seal structure according to item 1, wherein the second shape is one of a hollow shape; a shape having a circular arc section; and a sheet shape, and the first shape is one of a compressed shape and a bent shape of the second shape.
8. The seal structure according to item 7, wherein the first shape is one of: a compressed shape of the hollow shape, wherein the hollow shape is compressed in a diameter direction in a cross section; and a bent shape of one of the shape having a circular arc section and a sheet shape.
9. A soundproofing cover for automobile engines, comprising the seal structure according to item 1.
10. A process for producing a seal structure, the process comprising: heating a structure comprising: (a) an elastically deformable substrate; and (b) a thermoplastic substance bonded to the elastically deformable substrate to a temperature not less than the softening temperature of the thermoplastic substance (b): deforming the structure into a deformed shape; and cooling the structure having the deformed shape.
11. The process for producing a seal structure according to item 10, wherein the structure is produced by one of a process comprising: transforming the thermoplastic substance (b) into a heat-melt liquid; applying the heat-melt liquid to the elastically deformable thermoplastic substance (a); and cooling the heat-melt liquid; and a process comprising: applying a liquid containing the thermoplastic substance (b) and a solvent to the elastically deformable substrate (a); and drying the solvent.
12. The process for producing a seal structure according to item 10, wherein the structure is produced by a process comprising: extrusion-molding a material to be the elastically deformable substrate (a) and the thermoplastic substance (b) with a bilayer extruder.

According to the invention, there is provided a seal structure which is excellent in each performance of fluid-sealing, soundproofing, and heat insulation and also excellent in mounting workability to each site to be treated, and is obtained at a low cost without requiring particular materials and facilities at it production. Moreover, according to the invention, there is provided a soundproofing cover for automobile engines excellent in mounting ability and soundproofing performance.

### BRIEF DESCRIPTION OF THE DRAWINGS

Figure 1 is a sectional view schematically showing one example of the seal structure of the invention (seal structure having an O-shaped section).
Figure 2 is a sectional view schematically showing another example of the seal structure of the invention (seal structure having a C-shaped section).
Figure 3 is a sectional view schematically showing still another example of the seal structure of the invention (sheet-shaped seal structure).
Figure 4 is a sectional view schematically showing a deformed state of the seal structure shown in Fig. 1.
Figure 5 is a sectional view schematically showing a deformed state of the seal structure shown in Fig. 2.
Figure 6 is a sectional view schematically showing a deformed state of the seal structure shown in Fig. 3.
Figures 7A to 7E is a sectional view showing the other example of a seal structure.
Figures 8A and 8B is a schematic illustration for explaining evaluation methods of mounting ability and restoration ability in Examples.
Figure 9 is a schematic illustration for explaining an evaluation method of soundproofing performance in Examples.

### DETAILED DESCRIPTION OF THE INVENTION

The following will describe the invention with reference to Drawings.

The seal structure of the invention has (a) an elastically deformable substrate and (b) a thermoplastic substance bonded to the elastically deformable substrate, and the elastically deformable substrate (a) has a first shape when the seal structure is in a temperature less than the softening temperature of the thermoplastic substance and a second shape when the seal structure is in a temperature not less than the softening temperature of the thermoplastic substance.

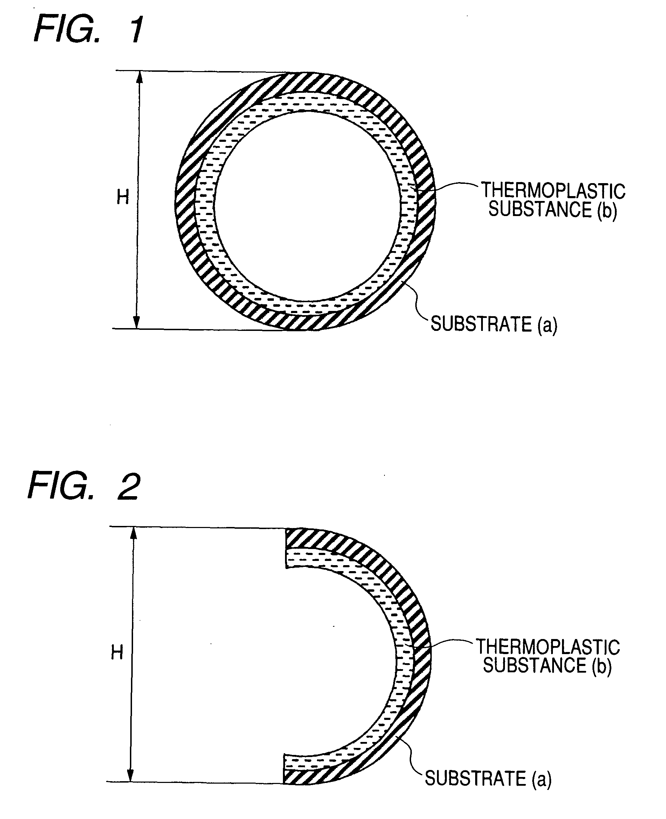

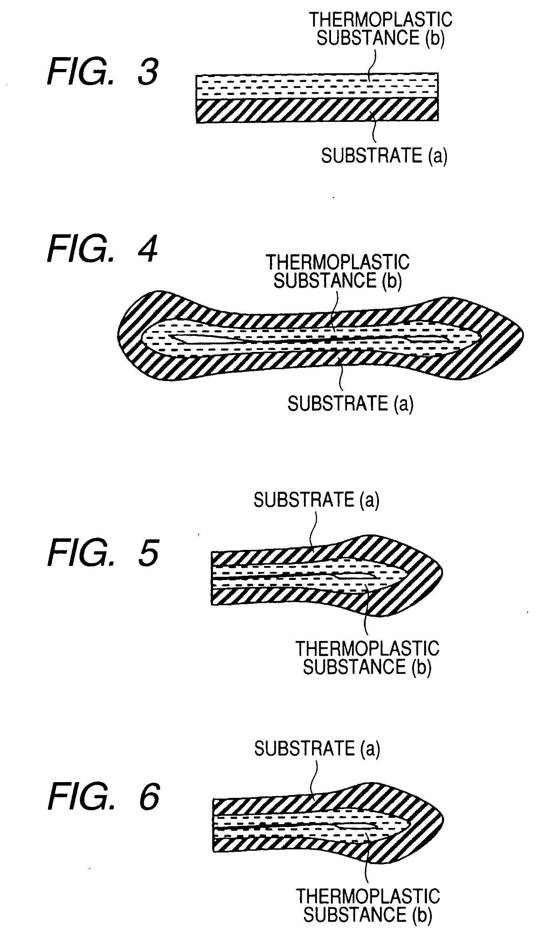

The seal structure of the invention is obtained by deforming a structure having a original shape (i.e., the second shape mentioned above) obtained by bonding an elastically deformable substrate (a) to a thermoplastic substance (b) upon heating to a temperature equal to or higher than the softening temperature of the thermoplastic substance (b) into a deformed shape (i.e., the first shape mentioned above), and cooling it with maintaining the deformed state. Specific shape of the original shape and the deformed shape can be selected according to the site to be treated. Examples of the original shape include a hollow shape, a shape having a circular arc-section, and a sheet shape, and examples of the deformed shape include a compressed shape and a bent shape of the original shape, especially a compressed shape of the hollow shape where the hollow shape is compressed in a diameter direction in a cross section and a bent shape of the shape having a circular arc section or a sheet shape along the longitudinal direction. For example, it may be any of the shapes shown in Fig. 1 to Fig. 6. In this regard, Fig. 1 to Fig. 3 are all sectional views schematically showing seal structures before deformation. Fig. 4 shows a state after deformation of the seal structure shown in Fig. 1, Fig. 5 shows a state after deformation of the seal structure shown in Fig. 2, and Fig. 6 shows a state after deformation of the seal structure shown in Fig. 3, each as a sectional view.

Specifically, the seal structure shown in Fig. 1 exhibits a tubular one having an O-shaped section or a hose-shaped one, wherein an inner layer composed of the thermoplastic substance (b) and an outer layer composed of the substrate (a) are bonded. As shown in Fig. 4, it is compressed in the diameter direction (in the vertical direction in the figure).

Moreover, the seal structure shown in Fig. 2 is one wherein the seal structure shown in Fig. 1 is cut into halves in the longitudinal direction and is a long one whose section is C-shaped or a half circle, the inner layer of the concave surface being the thermoplastic substance (b) and the outer layer being the substrate (a). As shown in Fig. 5, it is folded so that the thermoplastic substance (b) comes to the inside.

Furthermore, the seal structure shown in Fig. 3 is one wherein the substrate (a) and the thermoplastic substance (b) are bonded into a sheet. As shown in Fig. 6, it is folded so that the thermoplastic substance (b) comes to the inside.

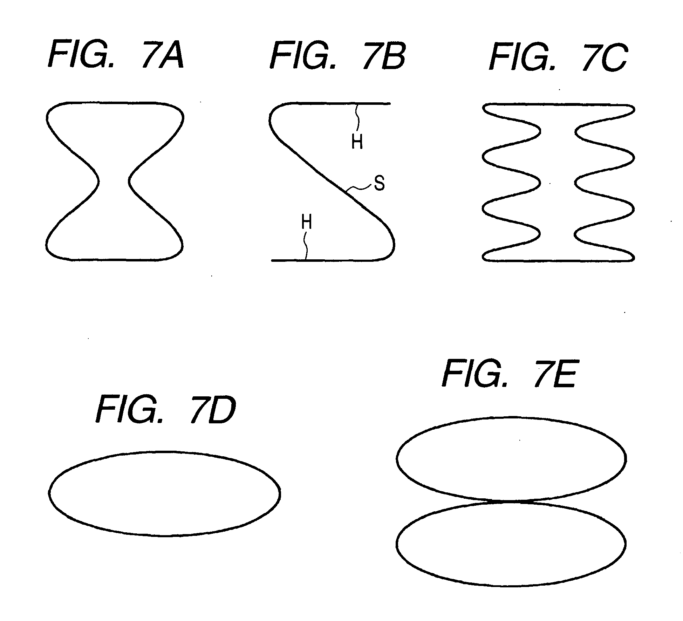

In addition, as shown in Fig. 7 as sectional views, substrates (a) having (A) a concave shape at the central part, (B) an S shape or Z shape, (C) a bellows-like shape, (D) an elliptic shape, (E) a figure-eight shape, and the like can be compressed in the vertical direction on the paper surface. In this regard, in all the seal structures shown in (A), (C), (D), and (E), the inner side is composed of the thermoplastic substance (b). Moreover, the seal structure shown in (B), the surfaces of the upper and lower horizontal parts H facing to the inclined part S and both surfaces of the inclined part are composed of the thermoplastic substance (b).

In the deformation shown in Fig. 4 and Fig. 5, it is preferable that the substrate (a) in the original shape having the original height (H) is deformed so as to have a height not more than a half of the original height (H) in terms of attaining excellent performance of each of fluid-sealing, soundproofing, and heat insulation. Moreover, in each shape shown in Fig. 7, a similar extent of deformation is suitable.

The substrate (a) may be any one easy to be elastically deformed and elastically restored after deformation. Furthermore, in consideration of sealing ability, various polymer materials such as rubbers and elastomers, thermoplastic resins, and thermosetting resins are suitable as main components. It is preferable that the elastically deformable substrate (a) comprises a crosslinked rubber or a thermoplastic elastomer. Specifically, there may be mentioned natural rubber, various synthetic rubbers and crosslinked products thereof such as CR (chloroprene rubber), SBR (styrene-butadiene rubber), NBR (nitrile-butadiene rubber), EPDM (ethylenepropylene-diene terpolymer), silicone rubbers, fluorocarbon rubbers, and acrylic rubbers; various elastomers such as soft urethanes, PP/EPDM dynamic crosslinkable thermoplastic elastomers, and styrene-based thermoplastic elastomers; various thermosetting resins such as hard urethanes, phenol resins, melamine resins, and polyimide resins without limitation thereto. The substrate (a) composed of a thermosetting resin or a crosslinked rubber is preferred due to a little change in rigidity between at normal temperature and at a time when heated. Moreover, even a thermoplastic resin can be used as the substrate (a) in the invention as far as it is crosslinked or its softening temperature is higher than the softening temperature of the thermoplastic substance (b). As the thermoplastic resin usable as the substrate (a), there may be mentioned polybutylene terephthalate, polyethylene terephthalate, polyvinyl chloride, polyvinylidene chloride, polyvinyl acetate, polyacrylic esters, styrene-butadiene copolymers, chlorinated polyethylene, polyvinylidene fluoride, ethylene-vinyl acetate copolymers, ethylene-vinyl acetate-vinyl chloride-acrylic ester copolymers, ethylene-vinyl acetate-acrylic ester copolymers, ethylene-vinyl acetate-vinyl chloride copolymers, Nylon, acrylonitrile-butadiene copolymers, polyacrylonitrile, polyvinyl chloride, polychloroprene, polybutadiene, thermoplastic polyimides, polyacetal, polyphenylene sulfide, polycarbonates, thermoplastic polyurethanes, and the like without limitation thereto.

Among the above, crosslinked EPDM is particularly preferred because of a low cost, a good shape-restoring characteristic, and good heat resistance and water resistance.

The substrate (a) may be a foam or a solid but a solid is preferred for achieving good sealing, soundproofing, and heat insulation. In the case of a foam, a fluid easily passes through the inside of the material directly. On the other hand, in the case of a solid, a fluid is difficult to pass through the inside directly.

In addition, as the substrate (a), inorganic materials including metals such as iron, aluminum, stainless steel, and copper, graphite, ceramics, glass, and the like can be employed, which are processed into fibers or fabrics for use, for example.

For transforming the substrate (a) into an aforementioned shape, e.g., an O-shaped section, a C-shaped section, or a sheet shape, it can be processed by general material-processing methods and the methods are not particularly limited. For example, when the substrate (a) is a rubber material or a resin material, it is possible to adopt extrusion molding, injection molding, compression molding, transfer molding, cutting, or the like. These processing methods are known general technologies and enable those skilled in the art to process it into any shape easily. Moreover, a commercially available rubber sheet, resin sheet, rubber hose, resin hose, or the like may be used as it is. In the case that the substrate (a) is a metal material, it is possible to adopt a method such as press molding, metal injection molding, sheet metal processing, or the like.

On the other hand, as the thermoplastic substance (b), various thermoplastic resins and various thermoplastic compounds can be used. However, when the substrate (a) is a thermoplastic substance, the thermoplastic substance (b) should have a softening temperature lower than the softening temperature of the above substrate (a) and the thermoplastic substance (b) is suitably selected according to the substrate (a).

In the seal structure of the invention, a deformed shape is maintained at a temperature range lower than the softening temperature of the thermoplastic substance (b) and, by heating to a temperature equal to or higher than the softening temperature of thermoplastic substance (b), the substrate (a) is restored to the original shape before deformation as the thermoplastic substance (b) is softened. Therefore, in order to achieve better shape maintenance and shape restoration of the seal structure, the thermoplastic substance (b) desirably has a remarkable difference in rigidity before and after the softening temperature. As the thermoplastic substance (b) having such a characteristic, there may be mentioned crystalline thermoplastic resins such as polyethylene, polypropylene, polyvinyl chloride, polyvinylidene chloride, polyvinyl acetate, chlorinated polyethylene, polyvinylidene fluoride, ethylene-vinyl acetate copolymers, Nylon, acrylonitrile-butadiene copolymers, polybutadiene, thermoplastic polyimides, polyacetals, polyphenylene sulfide, and thermoplastic polyurethanes; amorphous thermoplastic resins such as polycarbonates, polyacrylonitrile, polyacrylic esters, styrene-butadiene copolymers, polystyrene-vinyl acetate-vinyl chloride-acrylic ester copolymers, ethylene-vinyl acetate-acrylic ester copolymers, and ethylene-vinyl acetate-vinyl chloride copolymers; various thermoplastic substances such as low-melting-point glass frit, starch, solder, wax, and lead without limitation thereto. Among them, ethylene copolymers, especially ethylene-vinyl acetate copolymers are particularly preferred because they are low in cost and some of them have an extremely low rigidity at a temperature equal to or higher than the softening temperature.

Incidentally, the softening temperature in the invention is a temperature at which a material begins to flow. In the case that a thermoplastic substance is a polymer material and the polymer material is uncrosslinked or has a low degree of crosslinking, the temperature corresponds to melting point of a crystalline polymer material or glass transition point of an amorphous polymer material. When the polymer material is sufficiently crosslinked and does not flow eve upon heating, the softening point is absent. In the invention, the softening temperature of the thermoplastic substance (b) is preferably from 30°C to 200°C.

The method for forming a structure comprising the substrate (a) and the thermoplastic substance (b) bonded to the substrate (a) is not particularly limited but one of a process comprising: a process comprising: transforming the thermoplastic substance (b) into a heat-melt liquid; applying the heat-melt liquid to the elastically deformable thermoplastic substance (a); and cooling the heat-melt liquid; and, a process comprising: applying a liquid containing the thermoplastic substance (b) and a solvent to the elastically deformable substrate (a); and drying the solvent is preferred since the processes are convenient and requires no particular apparatus and facility. Examples of the liquid containing the thermoplastic substance (b) include a solution of the thermoplastic substance (b) dissolved in an appropriate solvent, and an emulsion of the thermoplastic substance (b) with an appropriate solvent. At the drying, heating may be applied, if necessary.

Among liquid thermoplastic substances (b), an emulsion is preferred since it hardly invites pollution of working environment. The emulsion herein is a state where a substance is dispersed in water. It is called a resin emulsion in the case that the thermoplastic substance (b) is a thermoplastic resin. It may be sometimes called a resin latex or a resin dispersion, which are the same as the resin emulsion. As the resin emulsion, an emulsion obtained by carrying out an emulsion polymerization, i.e., by polymerizing a monomer(s) in an emulsion state at polymerization may be employed as it is or a polymer obtained after polymerization may be emulsified in water by any suitable method. For example, ethylene copolymers such as ethylene-vinyl acetate copolymers and ethylene-acrylic acid copolymers are commercially available as emulsions. In the case of using a thermoplastic resin emulsion, a method of evaporating water after impregnation is not particularly limited and, for example, methods such as hot air blowing and vacuum drying may be adopted.

In the case that the substrate (a) is a resin, it is possible that combination of the substrate (a) and the thermoplastic substance (b) is produced by extrusion-molding a material to be the elastically deformable substrate (a) and the thermoplastic substance (b) with a bilayer extruder. Specifically, it is possible to form on a bilayer extruder a bilayer hose wherein the thermoplastic substance (b) is disposed onto the outer circumference of a hollow substrate (a). Although the bilayer extruder is a special expensive facility, it is an effective production means in the case of a large scale production owing to its high productivity. Moreover, it may be produced by an insert molding wherein the thermoplastic substance (b) is inserted into a mold and the substrate (a) is subjected to an injection molding.

In addition to the individual methods exemplified in the above, it is possible to employ any methods for combining the substrate (a) with the thermoplastic substance (b).

Incidentally, the thickness of each of the substrate (a) and the thermoplastic substance (b) is suitably determined in consideration of kinds thereof, sites to be applied, and the like. Moreover, the thermoplastic substance (b) may be formed so as to cover the whole surface of one side of the substrate (a) as shown in Figures and also may be formed partially on one side of the substrate (a), for example, in a stripe form, a lattice form, or the like.

Then, the seal structure of the invention is obtained by heating the bonded structure of the substrate (a) to the thermoplastic substance (b) to a temperature equal to or higher than the softening temperature of the thermoplastic substance (b) to deform the whole into a deformed shape, e.g., the shape as shown in Fig. 4 to Fig. 6, cooling it to a temperature (usually room temperature) lower than the softening temperature of the thermoplastic substance (b) with maintaining the deformed shape, and subsequently releasing the pressure for deformation. Such a series of shape-maintaining operations may be carried out by heating the bonded article in an oven, taking it out, and immediately deforming and cooling it on a press. For the deformation, a plummet may be loaded without using a press. Moreover, for continuous production, a calender roll may be used for deformation under heating, followed by cooling on a cold roll with maintaining deformation. The shape-maintaining operations are not limited thereto and any method can be employed as far as they can achieve deformation under heating and cooling with maintaining the deformed state.

In the above steps, the heating temperature is preferably in the range of 80°C to 200°C and the cooling temperature is preferably in the range of 25 to 80°C although they depend on the kind of the thermoplastic substance (b).

The seal structure of the invention has a shape-memory property that a deformed state is maintained at a temperature lower than the softening temperature of the thermoplastic substance (b) and the deformed state was released by heating it to a temperature equal to or higher than the softening temperature of the thermoplastic substance (b). Therefore, the seal structure of the invention has respective mechanisms for shape-maintenance and shape-restoration. The seal structure of the invention is not limited by a particular theory but the inventors presume that the shape-maintenance and shape-restoration are exhibited according to the following mechanisms.

When the substrate (a) and the thermoplastic substance (b) are deformed in a bonded state, a force to return to the original shape before deformation from a deformed shape acts on the substrate (a) by an elastic restoration force but the thermoplastic substance (b) is also deformed into the same shape and when the thermoplastic substance (b) has a shape-maintaining force larger than the elastic restoration force of the substrate (a), the deformed shape is maintained (shape-maintaining ability). On the other hand, when the shape-restoration force of the substrate (a) is higher than the shape-maintaining force of the thermoplastic substance (b), a force to restore the shape before deformation (shape-restoring property) is exhibited. A thermoplastic substance is softened upon heating to a temperature equal to or higher than its softening temperature to decrease rigidity and sometimes becomes liquid. In such a state, it is possible to deform the substance with a small stress. Moreover, it is possible to maintain the deformed shape by cooling and solidifying it with maintaining the deformation to form a hardened article having an increased rigidity. According to such mechanisms, the shape-maintaining ability and shape-restoring ability of the seal structure of the invention are exhibited.

The seal structure of the invention is suitably used as a soundproofing cover for automobile engines owing to the aforementioned characteristics. When the above seal structure is mounted on seal sites of parts around the engine in a deformed state, the thermoplastic substance (b) is softened by the heat from the engine to restore the shape before deformation, whereby a good sealed state is attained.

### EXAMPLES

The present invention is now illustrated in greater detail with reference to Examples and Comparative Examples, but it should be understood that the present invention is not to be construed as being limited thereto.

### Example 1

A sheet (thickness: 0.2 mm, width: 5 mm) of an ethylene-vinyl acetate copolymer (melting point: 65°C) was inserted into a commercially available rubber hose (manufactured by Bridgestone Corporation, material: EPDM, inner diameter: 15 mm, thickness: 2 mm). Then, the rubber hose was held between iron plates having a thickness of 10 mm heated to 150°C and compressed so that a load of 5 kg per 1 mm of the rubber hose was imparted and the whole was cooled with compression over a period of 1 hour so as to be a temperature of 50°C or lower. The resulting seal material was a rope-shaped one and had a sectional shape almost similar to the shape shown in Fig. 4 and a thickness of 4.2 mm.

### Example 2

An emulsion of an ethylene-vinyl acetate copolymer (melting point: 65°C) was applied to the inside of a commercially available rubber hose (manufactured by Bridgestone Corporation, material: EPDM, inner diameter. 15 mm, thickness: 2 mm) so as to be 0.5 g per 1 mm of the rubber hose. Then, the rubber hose was held between iron plates having a thickness of 10 mm heated to 150°C and compressed so that a load of 5 kg per 1 mm of the rubber hose was imparted and the whole was cooled with compression over a period of 1 hour so as to be a temperature of 50°C or lower. The resulting seal material was a rope-shaped one and had a sectional shape almost similar to the shape shown in Fig. 4 and a thickness of 4.2 mm.

### Example 3

A sheet (thickness: 0.2 mm, width: 5 mm) of an ethylene-vinyl acetate copolymer (melting point: 65°C) was inserted into a commercially available hose (manufactured by Sekisui Chemical Co., Ltd., material: Nylon, inner diameter: 15 mm, thickness: 2 mm). Then, the hose was held between iron plates having a thickness of 10 mm heated to 150°C and compressed so that a load of 5 kg per 1 mm of the rubber hose was imparted and the whole was cooled with compression over a period of 1 hour so as to be a temperature of 50°C or lower. The resulting seal material was a rope-shaped one and had a sectional shape almost similar to the shape shown in Fig. 4 and a thickness of 4.1 mm.

### Example 4

A commercially available rubber hose (manufactured by Bridgestone Corporation, material: EPDM, inner diameter: 15 mm, thickness: 2 mm) was cut into halves to result in a C-shaped section shown in Fig. 2. Then, a sheet (thickness: 0.2 mm, width: 5 mm) of an ethylene-vinyl acetate copolymer (melting point: 65°C) was attached to the inside of the cut hose and the hose was folded into two with facing the sheets each other. Thereafter, the rubber hose side was held between iron plates having a thickness of 10 mm heated to 150°C and compressed so that a load of 5 kg per 1 mm of the rubber hose was imparted and the whole was cooled with compression over a period of 1 hour so as to be a temperature of 50°C or lower. The resulting seal material was a rope-shaped one and had a sectional shape almost similar to the shape shown in Fig. 5 and a thickness of 4.1 mm.

### Example 5

A commercially available rubber sheet (manufactured by Kureha Elastomer, material: EPDM, width: 30 mm, thickness: 2 mm) and a sheet (thickness: 0.2 mm, width: 2.5 mm) of an ethylene-vinyl acetate copolymer (melting point: 65°C) were laminated and folded into two so that the sheets of the ethylene-vinyl acetate copolymer are faced each other. Then, the rubber sheet side was held between iron plates having a thickness of 10 mm heated to 150°C and compressed so that a load of 5 kg per 1 mm of the rubber sheet was imparted and the whole was cooled with compression over a period of 1 hour so as to be a temperature of 50°C or lower. The resulting seal material had a sectional shape almost similar to the shape shown in Fig. 6 and a thickness of 4.3 mm.

### Comparative Example 1

A commercially available foam material (manufactured by Nitto Denko Corporation, material: EPDM, bulk density: 100 kg/m³, width: 20 mm, thickness: 20 mm) was used as it was.

### Comparative Example 2

A commercially available foam material (manufactured by Nitto Denko Corporation, material: EPDM, bulk density: 100 kg/m³, width: 20 mm, thickness: 3 mm) was used as it was.

### Comparative Example 3

A commercially available rubber hose (manufactured by Bridgestone Corporation, material: EPDM, inner diameter: 15 mm, thickness: 2 mm) was used as it was.

### Evaluation of mounting ability and restoration ability

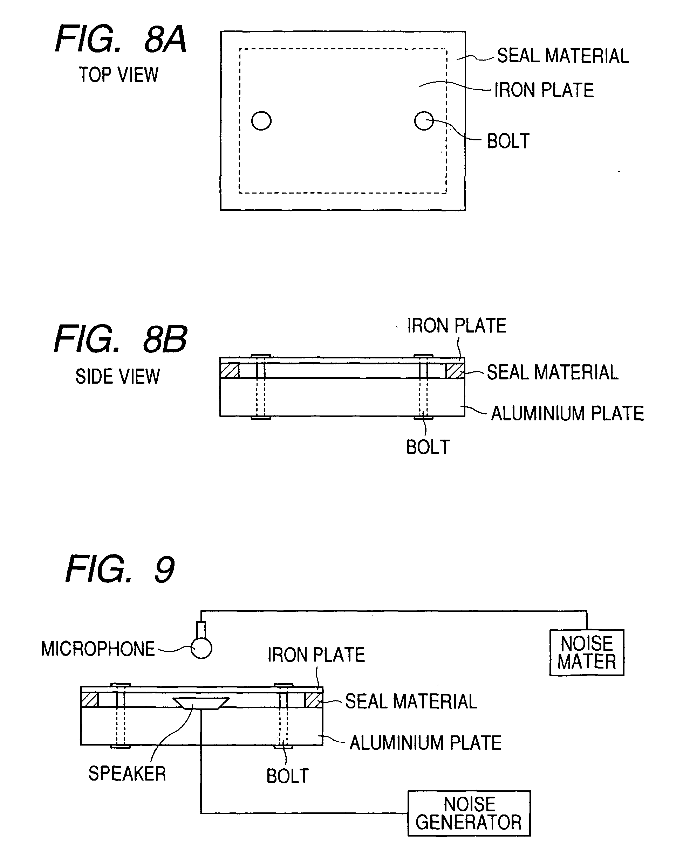

Using an iron plate to which each of the above seal materials was attached, mounting ability and restoration ability were evaluated. Namely, as shown in Figs. 8A and 8B, each seal material was attached to an iron plate having a thickness of 1 mm and a size of 400 mmx300 mm along the outer circumstance of the plate with a pressure-sensitive adhesive tape. The part to which the seal material was not attached was fixed with a bolt to an aluminum plate having a thickness of 70 mm and a size of 400 mmx300 mm via a spacer made of iron and having a thickness of 5 mm (not shown in the figure) so that the seal material was disposed between the iron plate and the aluminum plate. However, for the seal material of Example 5, the seal material was disposed at four corners of the iron plate so that no gap was formed when the seal material was folded at the corner parts. Moreover, the bolts were used at two parts of both ends of the iron plate and the aluminum plate and were fastened until the gap between the iron plate and the aluminum plate became equal to the thickness of the spacer. Then, after the fastening of the bolts, the integrated seal material, iron plate, aluminum plate, and spacer were held in a constant-temperature bath of 75°C for 10 minutes.

With regard to the evaluation of the mounting ability, one which could be mounted without compressing the seal material at the above fixing with the bolts was judged "A" and one which could not be mounted unless the seal material was compressed was judged "B". Moreover, with regard to the evaluation of the restoration ability, the presence of a gap between the seal material and the aluminum plate was visually confirmed after the holding in the constant-temperature bath. At that time, one resulting no gap was judged "A" and one resulting a gap was judged "B". The results are shown in Table 1.

### Evaluation of soundproofing performance

As one sealing performance, soundproofing performance was evaluated. First, as in Figs. 8A and 8B, a seal material was mounted between the iron plate and the aluminum plate via the spacer made of iron and a speaker was housed at a central part surrounded with the seal material. Then, as shown in Fig. 9, white noise from a noise generator was generated toward the iron plate and the noise was measured by means of a microphone placed 150 mm above the iron plate, whereby an all-path value of the noise level was evaluated. In this connection, a noise level in a state where no seal material was mounted was found to be 85 dBA. The results are shown in Table 1.

**Table 1**

| | Example 1 | Example 2 | Example 3 | Example 4 | Example 5 | Comparative Example 1 | Comparative Example 2 | Comparative Example 3 |
|---|---|---|---|---|---|---|---|---|
| Mounting ability | A | A | A | A | A | B | A | B |
| Restoration ability | A | A | A | A | A | A | B | A |
| Soundproof performance Noise level (dBA) | 52 | 54 | 51 | 51 | 53 | 53 | 82 | 52 |

All the seal materials of Examples 1 to 4 had a thickness of 19 mm before deformation and was shape-maintained in a state that the shape was compressed into a thickness of about 4 mm. The seal material of Example 5 was shape-maintained in a state that the sheet-like shape was folded. The seal materials of Comparative Examples 1 and 3 had a thickness of about 20 mm in an uncompressed state but the seal material of Comparative Example 2 had a thickness of about 3 mm in an uncompressed state.

As shown in Table 1, all the seal materials of Examples according to the invention had a good mounting ability. Moreover, after held in the constant-temperature bath, each of the seal material was restored to the uncompressed shape until the thickness became equal to the thickness of the spacer and no gap was generated between the seal material and the aluminum plate. Furthermore, a noise level was low and a good soundproofing performance was maintained. To the contrary, it was necessary to compress the seal materials of Comparative Examples 1 and 2 at the fastening of the bolts and hence the bolts should be fastened in a state which resists the compression stress of the seal materials, so that mounting ability was very poor. The seal material of Comparative Example 3 exhibited a good mounting ability but a gap between the seal material and the aluminum plate still remained after the material was held in the constant-temperature bath, a noise level was high and a soundproofing performance was insufficient.

In the case that an actual soundproofing cover for engines is supposed, in the usual seal material shown in each Example, mounting ability becomes worse when the thickness is increased so as to fill a gap in order to exhibit a sufficient soundproofing performance, while a gap is formed between the material and the engine and thus the soundproofing performance becomes worse when the seal material is thinned in order to improve the mounting ability. However, by using the seal material as shown in each Example, mounting ability is good since the seal material has a compressed shape at its mounting and, after the mounting, it exhibits a good soundproofing performance with filling the gap between the material and the engine through restoration of the thickness upon heating.

While the present invention has been described in detail and with reference to specific embodiments thereof, it will be apparent to one skilled in the art that various changes and modifications can be made therein without departing from the spirit and scope thereof

The present application is based on Japanese Patent Application No. 2005-210897 filed on July 21, 2005, and the contents thereof are incorporated herein by reference.

## Claims

1. A seal structure comprising:
(a) an elastically deformable substrate; and
(b) a thermoplastic substance bonded to the elastically deformable substrate, the elastically deformable substrate (a) having a first shape upon the seal structure being in a temperature less than the softening temperature of the thermoplastic substance, and
the elastically deformable substrate (a) having a second shape upon the seal structure being in a temperature not less than the softening temperature of the thermoplastic substance.

2. The seal structure according to claim 1,
wherein the elastically deformable substrate (a) comprises one of a crosslinked rubber and a thermoplastic elastomer.

3. The seal structure according to claim 1,
wherein the elastically deformable substrate (a) comprises EPDM.

4. The seal structure according to claim 1,
wherein the thermoplastic substance (b) comprises a thermoplastic resin.

5. The seal structure according to claim 1,
wherein the softening temperature of the thermoplastic substance (b) is from 30 to 200°C.

6. The seal structure according to claitn 1,
wherein the thermoplastic substance (b) comprises an ethylene copolymer.

7. The seal structure according to claim 1,
wherein the second shape is one of a hollow shape; a shape having a circular arc section; and a sheet shape, and
the first shape is one of a compressed shape and a bent shape of the second shape.

8. The seal structure according to claim 7,
wherein the first shape is one of
a compressed shape of the hollow shape, wherein the hollow shape is compressed in a diameter direction in a cross section; and
a bent shape of one of the shape having a circular arc section and a sheet shape.

9. A soundproohng cover for automobile engines, comprising the seal structure according to claim 1.

10. A process for producing a seal structure, the process comprising:
heating a structure comprising: (a) an elastically deformable substrate; and (b) a thermoplastic substance bonded to the elastically deformable substrate to a temperature not less than the softening temperature of the thermoplastic substance (b):
deforming the structure into a deformed shape; and
cooling the structure having the deformed shape.

11. The process for producing a seal structure according to claim 10,
wherein the structure is produced by one or:
a process comprising: transforming the thermoplastic substance (b) into a heat-melt liquid; applying the heat-melt liquid to the elastically deformable thermoplastic substance (a); and cooling the heat-melt liquid;
and
a process comprising: applying a liquid containing the thermoplastic substance (b) and a solvent to the elastically deformable substrate (a); and drying the solvent.

12. The process for producing a seal structure according to claim 10,
wherein the structure is produced by a process comprising:
extrusion-molding a material to be the elastically deformable substrate (a) and the thermoplastic substance (b) with a bilayer extruder.
